# EUROPÄISCHE PATENTANMELDUNG

(11) **EP 0 920 233 A2**
(43) Veröffentlichungstag der Anmeldung: **02.06.1999**
(21) Anmeldenummer: 98203944.8
(22) Anmeldetag: 23.11.1998
(51) Int. Cl.: H04Q 11/04, H04L 12/28

(54) **Drahtloses lokales Netzwerk mit Controller und wenigstens einem als Controller einsetzbaren Terminal**

(30) Priorität: 28.11.1997 DE 19752697
(71) Anmelder: Philips Patentverwaltung GmbH, 22335 Hamburg (DE); Koninklijke Philips Electronics N.V., 5621 BA Eindhoven (NL)
(72) Erfinder: Du, Yonggang, Dr.-Ing., Röntgenstrasse 24, 22335 Hamburg (DE)
(74) Vertreter: Volmer, Georg, Dipl.-Ing.

(57) **Zusammenfassung**

Die Erfindung bezieht sich auf ein lokales Netzwerk zur drahtlosen Übertragung von Steuer- und Anwenderinformationen zwischen mehreren Terminals und einem als Controller arbeitenden Terminal, welches zur Steuerung der Kommunikation im lokalen Netzwerk vorgesehen ist. Wenigstens ein weiteres nicht als Controller arbeitendes Terminal ist als Controller einsetzbar. Außer dem Controller empfängt wenigstens das als Controller einsetzbare Terminal aller zur Steuerung der Kommunikation im lokalen Netzwerk erforderlichen Steuerinformationen.

## Beschreibung

Drahtloses lokales Netzwerk mit Controller und wenigstens einem als Controller einsetzbaren Terminal

Die Erfindung bezieht sich auf ein lokales Netzwerk zur drahtlosen Übertragung von Steuer- und Anwenderinformationen zwischen mehreren Terminals und einem als Controller arbeitenden Terminal, welches zur Steuerung der Kommunikation im lokalen Netzwerk vorgesehen ist.

Unter einem drahtlosen lokalen Netzwerk ist ein Netzwerk mit mehreren Terminals zu verstehen, zwischen denen Steuer- und Anwenderinformationen drahtlos übertragen werden. Eine drahtlose Übertragung dient zur Übertragung von Informationen z.B.über Funk-, Ultraschall- oder Infrarotwege.

Das oben angegebene drahtlose lokale Netzwerk ist aus "Contention-free MAC protocol for Wireless ATM LAN" von C.Y. Ngo et al., ACTS Mobile Communications Summit 1997, Seiten 728-733, Oktober 1997, Aalborg, Dänemark, bekannt und enthält mehrere Terminals. Ein Terminal arbeitet als Controller und steuert die Kommunikation zwischen den Terminals. Zur Übertragung von Daten nach dem asynchronen Transfermodus (ATM) werden in diesem Netzwerk Zellen in Anwenderzeitschlitze oder -kanäle eingefügt und über ein Funkübertragungsmedium übertragen.

Der Erfindung liegt die Aufgabe zugrunde, ein drahtloses lokales Netzwerk zu schaffen, bei dem auch bei einem Ausfall des Controllers die Kommunikation zwischen den Terminals betreffende Daten nicht verloren gehen.

Die Aufgabe wird durch ein drahtloses lokales Netzwerk der eingangs genannten Art dadurch gelöst,
daß wenigstens ein weiteres nicht als Controller arbeitendes Terminal als Controller einsetzbar ist und
daß das als Controller einsetzbare Terminal wenigstens zum Empfang aller zur Steuerung der Kommunikation im lokalen Netzwerk erforderlichen Steuerinformationen vorgesehen ist.

Das erfindungsgemäße lokale Netzwerk enthält drei Arten von Terminals. Ein Terminal arbeitet als Controller, einige Terminals sind als Controller nach einem Ausfall oder nach dem Abschalten des aktuellen Controllers als Controller einsetzbar und weitere nicht als Controller vorgesehene Terminals. Damit nach einem Ausfall oder nach dem Abschalten des aktuellen Controllers ein nahtloser Übergang zu einem neuen Controller möglich ist und die bisher von dem aktuellen Controller gewonnen Daten aus den Steuerinformationen nicht verloren gehen, werden diese Daten nach Verarbeitung der Steuerinformationen ebenfalls von den als Controller einsetzbaren Terminals in eigenen Datenbanken gesammelt.

Ansprüche 2 und 3 beziehen sich auf die verschiedenen Gruppen von Steuerungsinformationen und die Speicherung von aus den Steuerungsinformationen gewonnen Daten in Datenbanken. Ansprüche 4 bis 6 zeigen, daß bei Ausfall oder Abschalten des Controllers ein nahtloser Übergang von einem alten auf einen neuen Controller möglich ist. Anspruch 7 erläutert die verschiedenen Übertragungsmöglichkeiten von Steuer- und Anwenderinformation. Durch Anspruch 8 wird aufgezeigt, daß sich die Erfindung auch auf ein als Controller einsetzbares Terminal bezieht.

Ausführungsbeispiele der Erfindung werden nachstehend anhand der Figuren näher erläutert. Es zeigen:
- Fig. 1: ein drahtloses lokales Netzwerk,
- Fig. 2: ein Architekturmodell der Schichten bzw. Protokolle eines im lokalen Netzwerk nach Fig. 1 verwendbaren Terminals,
- Fig. 3: ein Blockschaltbild eines im lokalen Netzwerk nach Fig. 1 verwendbaren Terminals,
- Fig. 4: eine in einem Terminal nach Fig. 2 verwendbare Funkvorrichtung,
- Fig. 5: eine symbolische Darstellung des Kommunikationsflusses zwischen vier Terminals eines lokalen Netzwerkes,
- Fig. 6: das Rahmenformat des zwischen den Terminals ausgetauschten Signals,

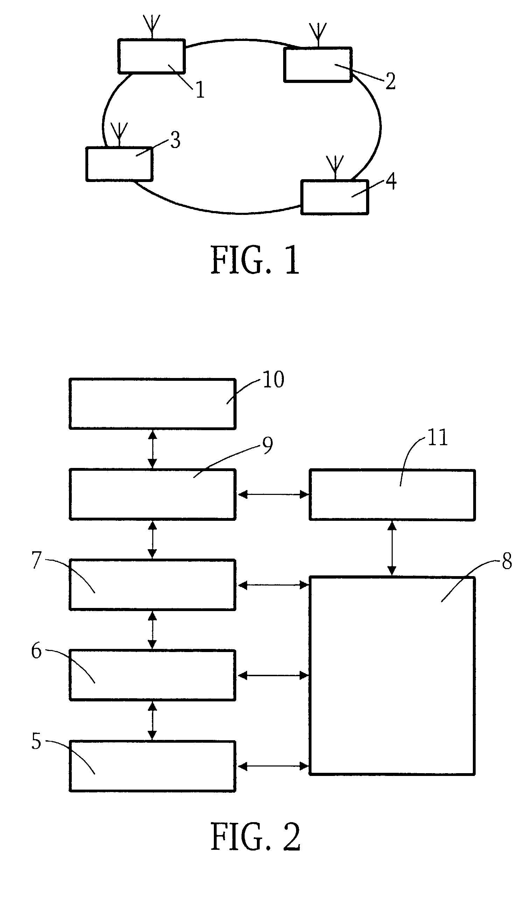

In Fig. 1 ist ein Ausführungsbeispiel eines lokalen Netzwerkes mit vier Terminals 1 bis 4 dargestellt, die über Funkstrecken jeweils Daten austauschen. Die in Fig. 1 eingezeichnete und die Terminals 1 bis 4 umfassende Ellipse soll den Funkbereich angeben, in dem zwischen zwei Terminals (1 bis 4) eine problemlose Funkübertragung möglich ist.

Die Funkübertragung zwischen den Terminal 1 bis 4 kann beispielsweise nach einem TDMA-, FDMA- oder CDMA-Verfahren (TDMA = Time Division Multiplex Access; FDMA = Frequency Division Multiplex Access; CDMA = Code Division Multiplex Access) durchgeführt werden. Die Verfahren können gegebenenfalls auch kombiniert werden. Mit Hilfe der genannten Verfahren können beispielsweise digital vorliegende Informationen oder auch in Pakete verpackte digitale Informationen zwischen den Terminals 1 bis 4 übertragen werden. Ein Beispiel für ein Paketübertragungsverfahren ist der asynchrone Transfermodus (ATM), welcher Pakete mit einer definierten Bytelänge erzeugt, die Zellen genannt werden. Eine Zelle enthält ein Kopffeld mit beispielsweise 5 Byte und ein Informationsfeld mit beispielsweise 48 Byte. Die im Kopffeld der Zelle enthaltenen Informationen dienen insbesondere zur Adressierung und zur Durchführung von ATM-Vermitt-lungsfunktionen.

In Fig. 2 ist ein Architekturmodell der verschiedenen in einem Terminal 1 bis 4 verwendeten Schichten bzw. Protokolle dargestellt. Die unterste, physikalische Schicht legt, ähnlich wie beim OSI-Schichtenmodell, die funkübertragungstechnischen Funktionen für den Transport der Daten bzw. Nachrichten auf dem Funkübertragungsmedium fest. Diese physikalische Schicht ist in Fig. 2 als Block 5 bezeichnet. Auf der ersten Schicht baut die zweite Schicht auf, die als MAC-Schicht (MAC = medium access control) bezeichnet wird und durch den Block 6 in der Fig. 2 gekennzeichnet ist. Die der MAC-Schicht übergeordnete Schicht ist die dritte oder LLC-Schicht (LLC = logical link control), die in Fig. 2 als Block 7 bezeichnet ist. Die Protokolle der MAC- und LLC-Schicht beziehen sich auf die Zugriffskontrolle und Sicherungsschicht des OSI-Schichtenmodells. Die MAC-Schicht steuert den Mehrfachzugriff der Terminals zum Übertragungsmedium (Funkübertragungsmedium), und die LLC-Schicht (LLC = Logical Link Control) führt eine Fluß- und Fehlerkontrolle durch. Solche Protokolle sind z.B. aus "On Architectures for Broadband Wireless Systems" von S. Jiang et al., IEEE Communications Magazine, October 1997, Seiten 132 bis 140 oder aus "Contention-free MAC protocol for Wireless ATM LAN" von C.Y. Ngo et al., ACTS Mobile Communications Summit 1997, Seiten 728-733, Oktober 1997, Aalborg, Dänemark, oder aus "Computer Networks" von Andrew S. Tanenbaum, Second Edition, Prentice-Hall International, Inc., 1988, Seiten 117 bis 131, 196 bis 212 und 262 bis 265 bekannt.

Zur Echtzeitsteuerung der physikalischen, der MAC- und LLC-Schicht ist eine untere Steuerungseinheit als Block 8 eingezeichnet. Diese untere Steuerungseinheit ist z.B. für die Kanal- oder Zeitschlitzzuweisung bei Verwendung eines TDMA-Verfahrens und für die Parametersetzung bei der Fehlersicherung, zur Rahmensynchronisation usw. zuständig. Dieser unteren Steuerungseinheit ist eine MAC-Datenbank zugeordnet, die aus weiter unten erläuterten MAC-Steuerinformationen gewonnene Daten enthält.

Auf der LLC-Schicht baut eine Anpassungsschicht (service adaptation layer) auf, die in der Fig. 2 als Block 9 gekennzeichnet ist. Diese paßt von der höchsten Schicht, die als Anwenderschicht (user application layer) bezeichnet wird und in Fig. 2 durch Block 10 dargestellt ist, gelieferte Daten einem bestimmten Format an. Beispielsweise kann eine solche Schicht Zellen nach dem asynchronen Transfermodus (ATM) erzeugen (Paketisierungsfunktion). Diese Zellen oder andere von der Anpassungsschicht gelieferte Daten werden in der MAC-Schicht als Anwenderinformationen in bestimmte zur Funkübertragung vorgesehene Transportkanäle eingefügt. Die Anwenderschicht kann z.B. eine Sprachdaten oder eine Videodaten oder eine Daten eines Dienstes liefernde Instanz sein. Ein Sprachcodec liefert z.B. Sprachdaten eines Benutzers. Ein Videocodec liefert Daten einer Videoquelle. Unter den Daten eines Dienstes können z.B. Daten nach dem Internet-Protokoll, E-Mail-Daten usw. sein.

Parallel zu der Anpassungsschicht ist eine obere Steuerungseinheit als Block 11 in der Fig. 2 eingezeichnet. Diese obere Steuerungseinheit ist z.B. für die eine Terminalregistrierung, für die Verbindungssteuerung zwischen z.B. zwei Terminals (call admission control) usw. zuständig. Der oberen Steuerungseinheit ist eine Terminal- und Verbindungs-Datenbank zugeordnet. In der Terminal-Datenbank sind z.B. Registrierungsinformationen der im lokalen Netzwerk eingebundenes Terminals abgelegt. Die Verbindungs-Datenbank enthält Verbindungen zugeordnete Daten, z.B. die Teilnehmer (Anwender) der Verbindung und die Verbindung kennzeichnende Daten (Bandbreite, Art der Verbindung usw.). Je nachdem, ob ein normales Terminal (ohne Controllerfünktion) oder ein als Controller einsetzbares Terminal vorliegt, kann die Komplexität der unteren und oberen Steuerungseinheiten und die entsprechenden zu verwaltenden Daten in den Datenbanken unterschiedlich sein.

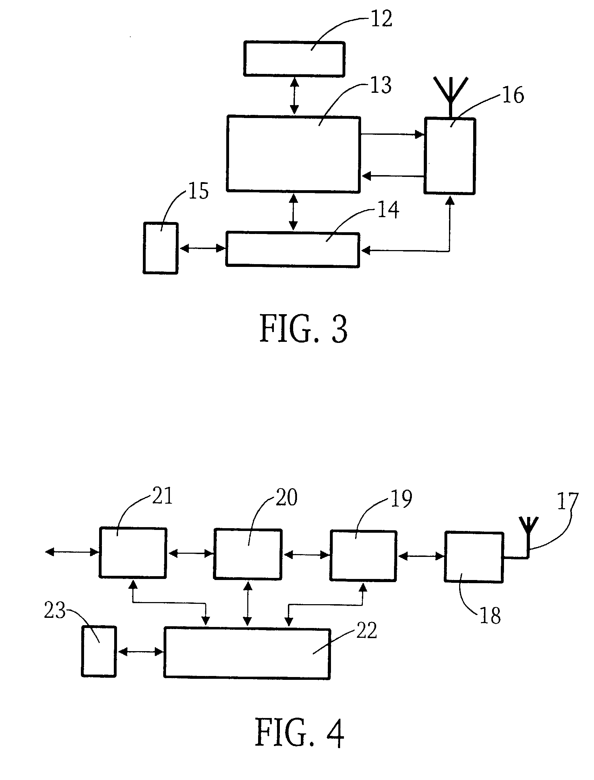

Ein Ausführungsbeispiel eines Terminals 1 bis 4 zeigt Fig. 3. Ein solches Terminal enthält eine Station 12, einen ersten und zweiten Prozessor 13 und 14, eine Terminal- und Verbindungs-Datenbank 15 und eine Funkvorrichtung 16. Die Station 12, welche das Anwenderschicht-Protokoll ausführt, kann beispielsweise ein Bildfernsprecher, ein Personal-Computer, eine Workstation oder ein Fernsprecher sein. Der Prozessor 13 ist für die Ausführung des Protokolls der Anpassungsschicht zuständig und kann beispielsweise von einer Station gelieferte Daten in ATM-Zellen umsetzen oder aus den von der Funkvorrichtung 16 zugeführte ATM-Zellen Daten entnehmen (segmentation and reassembly). Der zweite Prozessor 14 tauscht mit der Terminal- und Verbindungs-Datenbank 15, der Funkvorrichtung 16 und dem ersten Prozessor 13 Daten aus und führt die Funktionen der oberen Steuerungseinheit aus.

Die Funkvorrichtung 16 ist in der Fig. 4 detaillierter dargestellt. Diese enthält eine Antenne 17, eine Hochfrequenzschaltung 18, ein Modem 19, eine MAC-Schaltung 20, eine LLC-Schaltung 21, einen dritten Prozessor 22 und eine MAC-Datenbank 23. Die Schaltelemente 18 und 19 benötigen keine weitere Erläuterung, da diese aus anderen Funkvorrichtungen bekannte Schaltungselemente sind. Die MAC- und die LLC-Schaltungen führen die Funktionen der MAC- und LLC-Schicht aus und können z.B. als ein vierter und fünfter Prozessor realisiert sein. Daten zwischen erstem Prozessor 13 und Hochfrequenzschaltung 18 werden über die Schaltungskette LLC-Schaltung 21, MAC-Schaltung 20 und Modem 19 übertragen. Der dritte Prozessor 22 tauscht Daten mit der MAC-Datenbank 23 aus, steuert die LLC- und MAC-Schaltungen 21 und 20 und das Modem 19 und führt die Funktionen der unteren Steuerungseinheit aus.

Der Datenaustausch im lokalen Netzwerk wird von einem der Terminals 1 bis 4 gesteuert, welches als zentralisierter Controller bezeichnet wird. Zwischen den Terminals 1 bis 4 werden zwei Arten des Kommunikationsflusses unterschieden. Ein erster Kommunikationsfluß bezieht sich auch den Austausch von Steuerungsinformationen zwischen dem zentralisierten Controller und den anderen Terminals. Die Übertragung von Anwenderinformationen zwischen den Terminals des lokalen Netzwerks ist ein Kennzeichen des zweiten Kommunikationsfluß. Diese Kommunikationsflüsse lassen sich anhand der Fig. 4 näher erläutern, die vier Terminals 24 bis 27 zeigt. Das Terminal 27 ist der zentralisierte Controller. Steuerungsinformationen werden jeweils zwischen dem zentralisierten Controller 27 und den Terminals 24 bis 26 ausgetauscht. Dieser erste Kommunikationsfluß ist durch unterbrochene Linien, welche jeweils durch Pfeile abgeschlossen sind, angedeutet. Es können also Steuerungsinformationen zwischen den Terminals 27 und 24, den Terminals 27 und 25 und den Terminals 27 und 26 übertragen werden. Anwenderinformationen dagegen werden untereinander zwischen allen Terminals 24 bis 27 übertragen. Dies wird durch kontinuierliche Linien, welche jeweils durch Pfeile abgeschlossen sind, in der Fig. 4 gezeigt.

Der zentralisierte Controller 27 arbeitet also als normales Terminal zum Austausch von Anwenderinformationen und als Zentrale zum Austausch von Steuerungsinformationen. Es liegt bezüglich des ersten Kommunikationsflusses eine Sterntopologie vor mit dem Controller im Zentrum und bezüglich des zweiten Kommunikationsflusses eine voll vermaschte Topologie.

Es lassen sich drei Gruppen von Steuerungsinformationen unterscheiden, welche anhand ihrer Aufrufhäufigkeit unterschieden werden. Das bedeutet, daß bestimmte Steuerungsinformationen langsame Prozesse und andere schnelle Prozesse beeinflussen.

Die erste, langsame Prozesse beeinflussende Gruppe von Steuerungsinformationen bezieht sich auf die Einbindung oder Registrierung eines Terminals in das lokale Netzwerk (Registrierungsphase). Hierunter fallen Steuerungsinformationen, welche z.B. zur Terminal- bzw. Benutzerauthentifizierung, zur Untersuchung des Terminal-bzw. Benutzerprofils, zur Zuweisung der Identifizierungsnummer des Terminals usw. verwendet werden. Unter einem Terminalprofil wird beispielsweise die Angabe des Verfahrens (z.B. ISDN, ATM usw.), die maximale Übertragungskapazität usw. verstanden. Die Steuerungsinformationen der ersten Gruppe werden auch Terminal-Steuerungsinformationen (terminal control functions) genannt. Es sei noch erwähnt, daß der zentralisierte Controller während der Registrierungsphase durch einen Eintrag in der Terminal-Datenbank 15 das Terminal registriert und dem einzubindenden Terminal beispielsweise Statusmeldungen usw. zuführt.

Die zweite Gruppe von Steuerungsinformationen bezieht sich auf verbindungsrelevante Eigenschaften. Ein in dem lokalen Netzwerk eingebundenes Terminal muß vor Verbindungsaufbau mit dem zentralisierten Controller z.B. die Verbindungsart, die benötigte Bandbreite über die gesamte Lebenszeit der Verbindung usw. klären (Signalisierung). Unter einer Verbindungsart ist eine Einzel-Verbindung (unicast connection), eine Mehrfach-Verbindung (multicast connection) oder eine Verteil-Verbindung (broadcast connection) zu verstehen. Bei einer Einzel-Verbindung oder Ende-zu-Ende-Verbindung besteht eine Verbindung eines ersten Terminals mit einem zweiten Terminal. Bei einer Mehrfach-Verbindung oder Punkt-zu-Multipunkt-Verbindung ist ein Terminal mit mehreren anderen Terminals des lokalen Netzwerks verbunden. Bei einer Verteil-Verbindung ist ein Terminal mit - allen anderen Terminals des lokalen Netzwerks verbunden. Zur Bandbreite ist zu erwähnen, daß beispielsweise eine mittlere, eine minimale usw. Bandbreite zwischen Terminal und zentralisierten Controller vereinbart wird. Die Steuerungsinformationen der zweiten Gruppe werden auch Verbindungs-Steuerungsinformationen (call control functions) genannt.

Die dritte und die schnellsten Prozesse beeinflussende Gruppe von Steuerungsinformationen betrifft die Funktionen der MAC-Schicht (MAC-Protokoll), d.h. den Vielfachzugriff auf das Funkübertragungsmedium. Die Steuerungsinformationen der dritten Gruppe werden auch MAC-Steuerungsinformationen (MAC control functions) genannt. Das MAC-Protokoll benutzt zur Übertragung von MAC-Steuerungsinformationen wenigstens einen MAC-Steuerungskanal, über welchen den jeweiligen Terminals Anwenderkanäle zur Übertragung von Anwenderinformationen zugewiesen werden. Es existieren drei Verfahren zur Übertragung von MAC-Steuerinformationen. Beim ersten Verfahren wird ein Kollisionskanal zur Übertragung der MAC-Steuerungsinformationen von allen Terminals benutzt. Falls zwei Terminals gleichzeitig auf den Kollisionskanal zugreifen kann ein solcher Konflikt beispielsweise mit dem Aloha-Protokoll gelöst werden. Ein zweites Verfahren benutzt zur Übertragung von MAC-Steuerinformationen einen einem Terminal jeweils fest zugewiesenen MAC-Steuerkanal. Dies wird als statische Zuweisung bezeichnet. Bei dem dritten Verfahren erfolgt eine Zuweisung jeweils eines MAC-Steuerkanals zu einem Terminal nur, wenn MAC-Steuerinformationen zu übertragen sind. Dies wird als dynamische Zuweisung bezeichnet.

Ein solches dynamisches Verfahren ist z.B. das sogenannte "Piggyback"-Verfahren, bei dem eine MAC-Steuerungsinformation zusammen mit einer Anwenderinformation in einem Kanal gesendet wird, um dem zentralisierten Controller den Bedarf für die nächste zu sendende Anwenderinformation über die MAC-Steuerinformation zu liefern. Falls über längere Zeit kein Anwenderinformation gesendet worden ist muß eine Verbindung zum Austausch von MAC-Steuerinformationen zum zentralisierten Controller erneut aufgebaut werden, bevor der zentralisierte Controller einen Kanal für Anwenderinformationen zuweisen kann. Bei diesem Verfahren muß der Controller immer die an die Anwenderinformation angehängte MAC-Steuerinformation empfangen, auch wenn die Anwenderinformation nicht mit dem zentralisierten Controller ausgetauscht wird.

Um einen erneuten Verbindungsaufbau beim "Piggyback"-Verfahren zu vermeiden, kann das aus "Contention-free MAC protocol for Wireless ATM LAN" von C.Y. Ngo et al., ACTS Mobile Communications Summit 1997, Seiten 728-733, Oktober 1997, Aalborg, Dänemark, bekannte dynamische Verfahren verwendet werden. Hierbei werden von Terminals, die eine bestimmte Zeit keine Anwenderinformationen versendet haben, aber wieder welche senden wollen, kurze Impulse zu einem von dem zentralisierten Controller vorgegebenen Zeitpunkt abgegeben. Der Controller kann daraufhin dem Terminal wieder einen Kanal für Anwenderinformationen zuweisen und MAC-Steuerinformationen nach dem "Piggyback"-Verfahren übertragen werden.

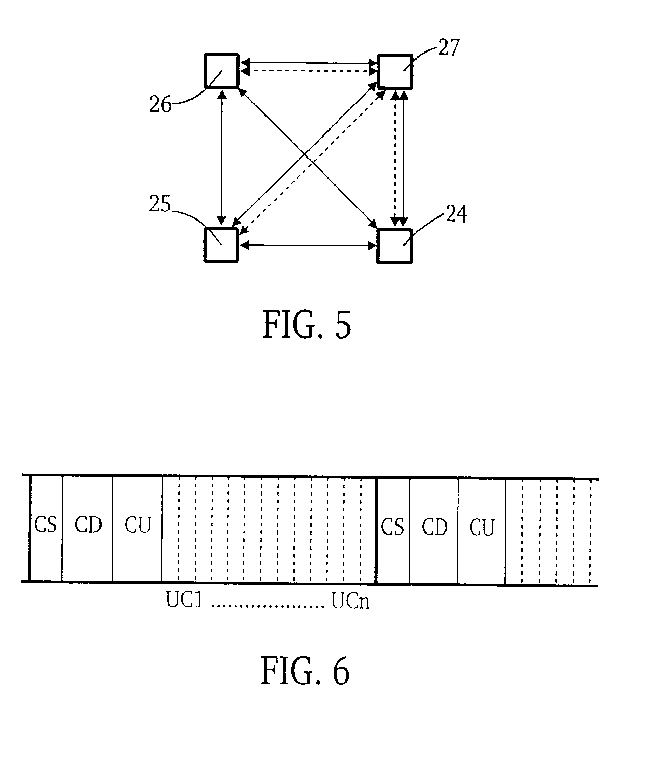

Die oben beschriebenen Steuerungsfunktionen gelten nicht nur für ein drahtloses lokales Netzwerk, welches nach dem asynchronen Transfermodus arbeitet, sondern auch für andere Verfahren. Im folgenden wird ein MAC-Protokoll beschrieben, bei welchem der Datenaustausch zwischen den Terminals 1 bis 4 nach dem TDMA-Verfahren durchgeführt wird. Die dazugehörige MAC-Rahmenstruktur ist in Fig. 5 dargestellt. Ein Rahmen enthält einen kollisionsbehafteten Kanal CS (contention channel), einen Sende-Steuerungskanal CD (control downlink), einen Empfangs-Steuerungskanal CU (control uplink) und mehrere Transportkanäle UC1, ... , Ucn.

Der kollisionsbehaftete Kanal CS ist erforderlich, damit ein Terminal in das lokale Netzwerk eingebunden werden kann. Über diesen kollisionsbehafteten Kanal teilt ein Terminal seine Anwesenheit dem zentralisierten Controller mit. Um den gleichzeitigen Zugriff von mindestens zwei Terminals auf den kollisionsbehafteten Kanal CS zu ermöglichen, kann in den einzelnen Terminals beispielsweise das ALOHA-Protokoll verwendet werden.

Wenn ein Terminal in dem lokalen Netzwerk registriert ist, kann der zentralisierte Controller den Sende-Steuerungskanal CD nutzen, um MAC-Steuerungsinformationen zu dem neu eingebundenen Terminal zu senden. Über diesen Sende-Steuerungskanal CD werden auch den anderen eingebundenen Terminals MAC-Steuerungsinformationen zugeführt, nachdem über den Empfangs-Steuerkanal CU dem Controller von den Terminals Anfragen nach Transportkanälen gesendet worden sind. Hierbei erhält ein Terminal über den Sende-Steuerkanal Transportkanäle für den Empfang und für die Sendung von Anwenderinformationen zugewiesen.

Der Empfangs-Steuerkanal kann Subkanäle enthalten, die jeweils einem Terminal statisch oder dynamisch zugeordnet sind und in die ein Terminal seine Anfrage einfügt. Hierbei kann dem Controller beispielsweise die Menge der Anwenderinformation mitgeteilt werden. Bezogen auf das Beispiel des nach dem asynchronen Transfermodus arbeitenden lokalen Netzwerks entspricht die Menge der Anzahl der zu sendenden Zellen. Falls der Controller nicht die Priorität der zu versendenden Anwenderinformation kennt, kann diese ihm ebenfalls übertragen werden. Diese zentrale Koordinierung mit Hilfe des zentralisierten Controllers vermeidet eine Kollision in den Transportkanälen. Es wird nämlich auf einen Transportkanal nur von einem einzigen Terminal in einem Rahmen zugegriffen. Ferner kann durch die Beachtung der Priorität von Anwenderinformation auch erreicht werden, daß zeitkritische Anwenderinformationen eines Terminals zuerst über die Transportkanäle gesendet werden als weniger zeitkritische (z.B. Sprache).

Die während eines MAC-Rahmens (vgl. Fig. 6) über den Empfangs-Steuerkanal CU ankommenden Anfragen werden nach bestimmten hier für die Erfindung nicht relevanten Vorgaben - z.B. auch unter Beachtung der Priorität von Anwenderinformationen - ausgewertet und das Ergebnis den jeweiligen Terminals über den Sende-Steuerkanal CD des nächsten Rahmens mitgeteilt. Hierdurch erfährt jedes Terminal welcher Transportkanal UCl bis UCn zur Übertragung von Anwenderinformation in dem MAC-Rahmen zugewiesen worden ist. Falls ATM-Zellen übertragen werden sollen, kann die Länge eines Transportkanals der Länge einer Zelle oder der Länge mehrerer Zellen entsprechen. In der Zuweisungsmitteilung ist natürlich auch die Meldung enthalten, welches Terminal Anwenderinformationen sendet welches Terminal diese erhält. Das sendende Terminal ist das, welches die Anfrage zum Controller gesendet hat. Beispielsweise wird einem ersten Terminal zur Sendung von Anwenderinformationen drei Transportkanäle zur Sendung von Anwenderinformationen zu einem zweiten Terminal und fünf Transportkanäle zur Sendung von Anwenderinformationen zu einem dritten Terminal zugewiesen. Gleichzeitig werden dem zweiten Terminal diese drei Transportkanäle und dem dritten Terminal diese fünf Transportkanäle zum Empfangen der Anwenderinformationen des ersten Terminals zugewiesen. Damit wird eine direkte Verbindung zwischen dem ersten und zweiten bzw. ersten und dritten Terminal realisiert. Um Transportkanäle korrekt zuweisen zu können, greift der Controller auf verbindungsrelevante Informationen zurück, die ihm während eines Verbindungsaufbaus zur Kenntnis gebracht worden sind. Hierunter fallen z.B. Informationen über die Bandbreite und Prioritäten.

Bisher ist vorausgesetzt worden, daß in dem lokalen Netzwerk der zentralisierte Controller fest vorgegeben ist. Es ist jedoch auch möglich, daß verschiedene Terminals ein neues lokales Netzwerk aufbauen und von diesen Terminals einer über ein bestimmtes im folgendem zu beschriebenes Protokoll zum Controller bestimmt wird. Als Controller können aber nur solche Terminals arbeiten, welche das entsprechende Protokoll enthält. Solche Terminals werden im folgenden als Terminals mit Controller-Fähigkeiten bezeichnet.

Ein in dem lokalen Netzwerk aktiver Controller sendet über ein bestimmtes Frequenzband in bestimmten zeitlichen Abständen einen Synchronisationsimpuls und erforderliche Systemkennungen (z.B. Netzkennung einer bestimmten Gruppe) aus. Wenn ein Terminal mit Controller-Fähigkeiten nach Aktivierung in einem bestimmten vorgegebenen Frequenzband diesen Synchronisationsimpuls detektiert, prüft das Terminal in einem ersten Schritt, ob es mit dem Controller eine Verbindung eingehen möchte und ob die Verbindung möglich ist. Falls dies möglich ist, werden die oben beschriebenen Vorgänge zur Registrierung eines Terminals gestartet.

Wenn über einen bestimmten Zeitraum das Terminal mit Controller-Fähigkeiten keinen Synchronisationsimpuls detektiert, erzeugt es in einem zweiten Schritt einen eigenen Synchronisationsimpuls. Dieses Terminal beabsichtigt also der Controller zu werden. Es kann jedoch möglich sein, daß zwei Terminals mit Controller-Fähigkeiten zur gleichen Zeit jeweils Synchronisationsimpulse aussenden. Wenn ein Terminal einen Synchronisationsimpuls aussendet, kann es nicht zur gleichen Zeit einen solchen detektieren. Um dieses Problem zu beheben, werden weitere Synchronisationsimpulse zu zufällig gewählten Zeitpunkten ausgestrahlt, so daß die Überlappungsautomatik nicht mehr auftritt. Ein Terminal prüft während der Zeit, in der es keinen Synchronisationsimpuls aussendet, ob ein anderer Synchronisationsimpuls vorhanden ist. Wenn ein Terminal einen Synchronisationsimpuls detektiert, wird die Bildung von weiteren Synchronisationsimpulsen beendet und nach einer bestimmten zufälligen Zeit mit der Prüfung gemäß dem ersten Schritt wieder begonnen. Wenn ein Terminal mit Controller-Fähigkeiten innerhalb einer zufällig gewählten Zeitdauer seinen Synchronisationsimpuls durch einen vom Rahmen vorgegebenen Zeitpunkt aussendet und während der restlichen Zeitdauer keinen Synchronisationsimpuls eines anderen Terminals detektiert, wird dieses Terminal der aktive Controller des lokalen Netzwerks.

In dem lokalen Netzwerk kann auch ein als Controller arbeitendes Terminal ausfallen oder aus dem Netzwerk genommen werden. In diesem Fall wird eine Übergabeprozedur von dem bisherigen Controller zu einem Terminal mit Controller-Fähigkeiten durchgeführt. Das dazu erforderliche Protokoll, welches ebenfalls in den Terminals mit Controller-Fähigkeiten abgelegt ist, wird im folgenden beschrieben. Die Übergabeprozedur führt einen nahtlosen Übergang zwischen dem alten und dem neuen Controller durch, so daß beispielsweise keine Verbindungen neu aufgebaut werden müssen. Mit dem nahtlosen Übergang werden alle zeitlichen Informationen und Steuerinformationen übergeben. Die zeitlichen Informationen beziehen sich beispielsweise auf den Rahmenstart usw.

In einem lokalen Netzwerk befinden sich häufig mehrere Terminals mit Controller-Fähigkeiten. Der aktuelle Controller kann einen oder mehrere dieser Terminals mit Controller-Fähigkeiten als Kandidaten für eine Controller-Nachfolge aussuchen. Eine solche Auswahl ist ein kontinuierlicher Prozeß, weil ein Kandidat beispielsweise eher aus dem Netzwerk genommen werden kann als der aktuelle Controller. Die Mitteilung über die Auswahl als Kandidat kann einem Terminal beispielsweise über den Sende-Steuerkanal des aktuellen Controllers zugeführt werden.

Um einen schnellen Übergang zwischen dem alten und neuen Controller zu ermöglichen, werden den Kandidaten die relevanten MAC-Steuerinformationen des aktuellen Controllers und der Terminals zugeführt, die diese MAC-Steuerinformationen verarbeiten müssen. Das ist ohne weiteres möglich, weil über den Sende-Steuerkanal alle Terminals mit Controller-Fähigkeiten die MAC-Steuerinformation des aktuellen Controllers empfangen können. Über den Sende-Steuerkanal empfangen alle Terminals mit Controller-Fähigkeiten die MAC-Steuerinformationen des aktuellen Controllers. Über den Empfangs-Steuerkanal empfangen alle Terminals mit Controller-Fähigkeiten die Anfragen aller Terminals. Hierbei können diese Steuerinformationen auf die gleiche Weise wie im aktuellen Controller abgearbeitet und in bestimmten dafür vorgesehenen Datenbanken abgelegt werden. Der einzige Unterschied zwischen dem aktuellen Controller und dem Kandidaten ist, daß der Kandidat keine aus der Abarbeitung der MAC-Steuerinformationen gewonnenen Daten aussendet.

Der Controller sendet auch Rahmeninformationen, damit die Terminals sich mit dem Controller bezüglich des Rahmens synchronisieren können. Hierbei kann die Rahmeninformation entsprechend dem Rahmentyp gebildet werden. Es kann beispielsweise ein festes oder flexibles Rahmenformat verwendet werden.

Ein Controller verarbeitet die oben beschriebenen in drei Gruppen eingeteilten Steuerinformationen. Der Datenaustausch zwischen aktuellem Controller und den Kandidaten bezüglich der Controller-relevanten Steuerinformationen ist so organisiert, daß die Steuerinformationen der dritten Gruppe (MAC-Steuerinformationen) über den Sende- und Empfangs-Steuerkanal übertragen werden. Hierbei empfangen die Kandidaten ständig die in den beiden Kanälen liegenden Steuerinformationen und führen das gleiche Protokoll wie der aktuelle Controller durch, damit diese den gleichen Status aufweisen. Die aus den MAC-Steuerinformationen gewonnenen Daten werden sowohl von dem aktuellen Controller als auch von den Kandidaten in einer eigenen MAC-Datenbank abgelegt. Weil der aktuelle Controller auch als normales Terminal arbeitet, ist es erforderlich, daß dieser auch z.B. bestimmte eigene Anfragen nach Transportkanälen über den Sende-Steuerkanal CD aussendet. Hierdurch können die Kandidaten auch diese Anfragen vom Controller entsprechend verarbeiten.

Es ist auch möglich, das ein Kandidat über zusätzliche spezielle MAC-Steuerinformationen, die von den Terminals, die keine Controller-Fähigkeit aufweisen, nicht zu interpretieren sind, den Inhalt seiner MAC-Datenbank mit dem Inhalt der MAC-Datenbank des aktuellen Controllers vergleicht. Bestehen hier Unterschiede, wird von dem Kandidaten eine Kopie der MAC-Datenbank über den Empfangs-Steuerkanal von dem aktuellen Controller angefordert, der eine entsprechende Kopie an den Kandidaten sendet.

Der Datenaustausch zwischen aktuellem Controller und den Kandidaten bezüglich der Steuerinformationen der ersten und zweiten Gruppe (Terminal- und Verbindungs-Steuerinformationen) wird über Transportkanäle realisiert. Hierzu wird zuerst eine Mehrfach-Verbindung zwischen aktuellem Controller und Kandidaten aufgebaut und dann die geänderten Daten einer Terminal- und Verbindungs-Datenbank des Controllers über die Transportkanäle zu den Kandidaten übertragen. Diese legen dann die empfangenen Daten in ihren entsprechenden Terminal- und Verbindungs-Datenbanken ab. Eine solche Übertragung wird dann durchgeführt, wenn der Inhalt einer Terminal- oder Verbindungsdatenbank geändert worden ist. Wenn der Controller einen neuen Kandidaten festgelegt hat, erhält dieser über eine Einzel-Verbindung den gesamten Inhalt der Terminal- und Verbindungsdatenbank des Controllers und legt diesen in den eigenen Datenbanken ab.

Außer den verschiedenen aus Steuerinformationen gewonnenen Daten muß ein Kandidat auch Synchronisationsinformationen und zeitliche Informationen erhalten. Um einen nahtlosen Übergang von Synchronisationsinformationen zu gewährleisten, muß ein Controller bzw. ein Terminal mit Controller-Fähigkeiten eine nicht näher dargestellte Notstromversorgung aufweisen. Eine solche Notstromversorgung kann beispielsweise eine Batterie oder ein während des normalen Betriebs aufgeladener Kondensator sein. Diese Notstromversorgung wird eingeschaltet, wenn ein Controller ausfällt oder abgeschaltet wird. Der Zeitpunkt des Ausfalls oder des Abschaltens des Controllers wird im folgenden als Ausfallzeitpunkt bezeichnet.

Nach dem Ausfallzeitpunkt sendet der aktuelle Controller über den Sende-Steuerkanal wenigstens eine Meldung (Ausfall-Meldung), daß er ausgefallen ist. Diese Ausfall-Meldung erhalten die Kandidaten. Die einzelnen Kandidaten haben während des normalen Betriebs von dem aktuellen Controller eine Priorität erhalten. Je höher die Prioritätszahl ist, um so niedriger ist die Priorität. Ein Kandidat mit der Priorität p_i = 0 hat die höchste Priorität. Sofort nach Empfang der Ausfallmeldung erzeugt der Kandidat CC_i mit der höchsten Priorität (p_i = 0) zu den vorgegebenen Zeitpunkten den für die Netzsynchronisation erforderlichen Synchronisationsimpuls, der bisher von dem alten Controller erzeugt worden ist, und übernimmt damit die zeitliche Steuerung des MAC-Rahmens.

Es ist möglich, daß auch der Kandidat CC_i mit der Priorität p_i = 0 nach dem letzten MAC-Rahmen des alten Controllers ausfällt. Wenn t der Bezugszeitpunkt des letzten von dem alten Controller explizit oder implizit mitgeteilten, durch den Ausfall oder die Abschaltung nicht aufgetretenen aber erwarteten Zeitpunkt für den Synchronisationsimpuls ist, dann erzeugt der Kandidat CC_j mit der Priorität p_j = 1 einen Synchronisationsimpuls, wenn dieser nach der Zeit t + δt keinen Synchronisationsimpuls des Kandidaten CC_i detektiert hat. Dieser Prozeß kann solange fortgeführt werden bis ein geeigneter Kandidat gefunden worden ist. Allgemein kann gesagt werden: Wenn k höher priorisierte Kandidaten keinen Synchronisationsimpuls erzeugt haben, muß der Kandidat CC_m mit der Priorität p_m = k einen Impuls zum Zeitpunkt t + k δt senden. Dieser Kandidat CC_m wird der neue Controller. Die Parameter k und δt müssen so gewählt sein, daß das Produkt k δt nur eine tolerierbare Synchronisationsverschiebung und damit verbundende Rahmenverzögerung verursacht.

Der Kandidat, welcher den Synchronisationsimpuls ausgesendet hat, wird zum neuen Controller. Dieser kann nahtlos an den Verarbeitungsprozeß des alten Controllers anschließen, da dieser alle relevanten Daten in den MAC-, Terminal- und Verbindungs-Datenbanken gespeichert hat.

Der oben beschriebene Übergang von einem alten auf einen neuen Controller ist nur möglich, wenn vor dem Ausfallzeitpunkt der alte Controller den Terminals mit Controller-Fähigkeiten den Zeitpunkt des Synchronisationsimpulses explizit oder implizit über den Sende-Steuerkanal CD mitteilt. Eine explizite Mitteilung stellt eine speziell erzeugte MAC-Steuerinformation dar. Eine implizite Mitteilung ist keine speziell erzeugte MAC-Steuerinformation, sondern ergibt sich z.B. aus der Rahmeninformation, wenn ein Rahmen mit konstanter Länge vorliegt.

Bei dem oben beschriebenen lokalen Netzwerk tritt keine Kollision bezüglich der Anwenderinformationen auf, wie beispielsweise bei einem nach dem Ethernet- oder Hyperlan-Verfahren arbeitenden Netzwerk. Eine Kollisionsfreiheit bezüglich der Anwenderinformation ist dagegen beim GSM-Verfahren realisiert. Hier ist jedoch keine dynamische Zuweisung von Transportkanälen möglich und eine Steuerung der Kommunikation erfolgt ausschließlich über eine Basisstation. Bei der Erfindung hingegen wird eine Steuerung der Kommunikation über ein als Controller arbeitendes Terminal erreicht.

## Patentansprüche

1. Lokales Netzwerk zur drahtlosen Übertragung von Steuer- und Anwenderinformationen zwischen mehreren Terminals und einem als Controller arbeitenden Terminal, welches zur Steuerung der Kommunikation im lokalen Netzwerk vorgesehen ist,
dadurch gekennzeichnet,
daß wenigstens ein weiteres nicht als Controller arbeitendes Terminal als Controller einsetzbar ist und
daß das als Controller einsetzbare Terminal wenigstens zum Empfang aller zur Steuerung der Kommunikation im lokalen Netzwerk erforderlichen Steuerinformationen vorgesehen ist.

2. Lokales Netzwerk nach Anspruch 1,
dadurch gekennzeichnet,
daß ein Controller zur Registrierung eines Terminals im Netzwerk, zur Verbindungsteuerung und zur Steuerung des Vielfachzugriffs auf das Übertragungsmedium vorgesehen ist und
daß der Controller wenigstens eine Datenbank enthält, die zur Speicherung von aus Steuerinformationen für die Registrierung, für die Verbindungssteuerung und für die Steuerung des Vielfachzugriffs abgeleiteten Daten vorgesehen ist.

3. Lokales Netzwerk nach Anspruch 2,
dadurch gekennzeichnet,
daß die als Controller einsetzbaren Terminals wenigstens eine Datenbank enthält, die zur Speicherung von aus Steuerinformationen für die Registrierung, für die Verbindungssteuerung und für die Steuerung des Vielfachzugriffs abgeleiteten Daten vorgesehen ist.

4. Lokales Netzwerk nach Anspruch 3,
dadurch gekennzeichnet,
daß nach einem Ausfall oder nach dem Abschalten des Controllers ein als Controller arbeitendes Terminal zur Detektion des Ausfalls oder des Abschaltens des Controllers vorgesehen ist und
daß ein als Controller einsetzbares Terminal nach der Detektion zur Übernahme der Funktion des alten Controllers vorgesehen ist.

5. Lokales Netzwerk nach Anspruch 6,
dadurch gekennzeichnet,
daß ein ausgefallener oder abgeschalteter Controller nach dem Ausfall oder nach dem Abschalten zur Sendung einer Ausfallmeldung vorgesehen ist und
daß ein als Controller einsetzbares Terminal mit der höchsten Priorität nach der Detektion der Ausfallmeldung durch einen Synchronimpuls, dessen Auftreten durch einen vom alten Controller vorgegebenen Zeitpunkt bestimmt ist, zur Übernahme der Synchronisation des Netzwerkes vorgesehen ist.

6. Lokales Netzwerk nach Anspruch 5,
dadurch gekennzeichnet,
daß nach einer bestimmten Zeit nach der Ausfallmeldung ein geringer priorisiertes, als Controller einsetzbares Terminal zur Ausgabe eines Synchronisationsimpulses und damit zur Übernahme des Synchronisation des Netzwerkes vorgesehen ist, wenn die höher priorisierten als Controller einsetzbaren Terminals keinen Synchronisationsimpuls erzeugt haben.

7. Lokales Netzwerk nach Anspruch 3,
dadurch gekennzeichnet,
daß die die Steuerung des Vielfachzugriffs betreffenden Steuerinformationen über einen Steuerkanal und die anderen Steuerinformationen nach einem entsprechenden Verbindungsaufbau über die für die Übertragung von Anwenderinformationen vorgesehenen Transportkanäle übertragen werden.

8. Als Controller einsetzbares Terminal in einem lokalen Netzwerk zur drahtlosen Übertragung von Steuer- und Anwenderinformationen zwischen dem Terminal und weiteren Terminals,
dadurch gekennzeichnet,
daß das als Controller einsetzbare Terminal wenigstens zum Empfang aller zur Steuerung der Kommunikation im lokalen Netzwerk erforderlichen Steuerinformationen vorgesehen ist.
